Europäisches Patentamt

European Patent Office

Office européen des brevets

(19)

(11) Veröffentlichungsnummer : **0 355 538 B1**

# (12) EUROPÄISCHE PATENTSCHRIFT

(45) Veröffentlichungstag der Patentschrift :
09.10.91 Patentblatt 91/41

(51) Int. Cl.$^5$ : **B29B 7/76**

(21) Anmeldenummer : 89114509.6

(22) Anmeldetag : 05.08.89

(54) Verfahren und Vorrichtung zum Herstellen von fliessfähigen Reaktionsgemischen für Mehrkomponentenkunststoffe.

(30) Priorität : 18.08.88 DE 3828061

(43) Veröffentlichungstag der Anmeldung :
28.02.90 Patentblatt 90/09

(45) Bekanntmachung des Hinweises auf die
Patenterteilung :
09.10.91 Patentblatt 91/41

(84) Benannte Vertragsstaaten :
DE FR GB IT

(56) Entgegenhaltungen :
EP-A- 0 143 196
US-A- 2 750 743
US-A- 2 872 903

(73) Patentinhaber : MASCHINENFABRIK
HENNECKE GMBH
Postfach 1180
W-5204 St. Augustin 1 (DE)

(72) Erfinder : Proksa, Ferdinand, Dr.
Am Arenzberg 9
W-5090 Leverkusen 3 (DE)
Erfinder : Sulzbach, Hans-Michael, Dipl.-Ing.
Hermann-Löns-Strasse 12
W-5330 Königswinter 21 (DE)
Erfinder : Althausen, Ferdinand
Wiescheider Strasse 16
W-5206 Neunkirchen 1 (DE)
Erfinder : Raffel, Reiner, Dipl.-Ing.
Müschbungert 2
W-5200 Siegburg (DE)

(74) Vertreter : Müller, Heinz-Gerd, Dipl.-Ing. et al
BAYER AG Konzernverwaltung RP
Patentabteilung
W-5090 Leverkusen 1, Bayerwerk (DE)

## Beschreibung

Die Erfindung betrifft ein Verfahren und eine Vorrichtung zum Herstellen von Mehrkomponentenkunststoff bildenden, fließfähigen Reaktionsgemischen, wobei mindestens zwei fließfähige Reaktionskomponenten unter Hochdruck vermischt werden und die Vermischungszeiten mit Pausenzeiten, in denen die Reaktionskomponenten in der Regel im Kreislauf geführt werden, abwechseln und die Umsteuerung durch mindestens ein hydraulisch betätigbares Umschaltorgan erfolgt, wie aus US-A-3706515 bzw. EP-A3-0143196 bekannt.

Das genannte Verfahren und die Vorrichtung werden insbesondere in der Polyurethantechnik, und zwar vorzugsweise für die Herstellung von Formteilen in Formwerkzeugen, angewendet. Während der Gemischherstellung, in der Fachsprache als "Schuß" bezeichnet, treten zu Beginn und Ende des Mischvorganges Vermischungsstörungen auf, weil sich die injizierten Komponentenstrahlen bei Schußbeginn erst einmal stabilisieren müssen bzw. zum Ende des Mischvorganges zusammenbrechen. Selbst bei hohen Durchsätzen verursachen bereits geringe unvermischte Komponentenanteile Störstellen im Endprodukte. Soweit diese Störstellen auf Sichtflächen erscheinen, ist das Formteil unbrauchbar oder muß zumindest nachgebessert werden. Je kürzer die Umschaltphasen sind, desto weniger treten solche Vermischungsstörungen auf.

Es besteht die Aufgabe, die erwähnten Umschaltphasen mit möglichst einfachen Mitteln zu minimieren.

Gelöst wird diese Aufgabe dadurch, daß beim Umsteuern der am Umschaltorgan anliegende hydraulische Haltedruck so lange aufrechterhalten wird, bis sich auf der Gegenseite der hydraulische Umsteuerdruck voll aufgebaut hat, und erst dann der hydraulische Haltedruck schlagartig entspannt wird.

Dadurch wird erreicht, daß das Umschaltorgan nicht vorzeitig bewegt wird, wie dies bisher aufgrund der Trägheit des hydraulischen Systems der Fall war.

Das neue Verfahren läßt sich auf alle Mischvorrichtungen bzw. Mischköpfe anwenden, welche mittels eines Umschaltorgans umsteuerbar sind, wie z.B. solche mit Kreislaufführung oder sogenannte "Geradeaus"-Mischköpfe. Je nach Konstruktion kann das Umschaltorgan bei den herkömmlichen Mischvorrichtungen bzw. Mischköpfen verschiedenartig gestaltet sein. Bei sogenannten Steuerkolbenmischköpfen (US-PS 3706515) lassen sich mittels des Steuerkolbens als Umschaltorgan beide Reaktionskomponenten gleichzeitig umsteuern. Erfolgt die Umschaltung über die Einspritzdüsen, so stellen die Einspritzdüsen in diesem Falle die Umschaltorgane dar (US-A-4399104). Schließlich ist es auch bekannt, in den Rücklaufleitungen Absperrventile vorzusehen. Die Anordnung von Umschaltventilen in den Zuleitungen vor dem Mischkopf ist ebenfalls gebräuchlich (US-A-4141470) EP-A3-0143196 betrifft ein Verfahren und eine Vorrichtung der eingangs genannten Art und beschäftigt sich speziell mit einem Drosselorgan im Mischkammerauslauf sowie mit dessen Arbeitsweise.

Die neue Vorrichtung zum Herstellen von Mehrkomponentenkunststoff bildenden, fließfähigen Reaktionsgemischen geht aus von einem Mischkopf, welcher eine Mischkammer enthält, in welche Zuleitungen über Düsenbohrungen einmünden, und die Zuleitungen über mindestens ein Umschaltorgan mit Rücklaufleitungen verbindbar sind, wobei das Umschaltorgan einen Hydraulikzylinder mit einem beidseitig wechselweise beaufschlagbaren Hydraulikkolben aufweist und von den so gebildeten Hydraulikräumen Hydraulikleitungen zu einem hydraulischen Schaltventil führen, wie aus US-A-3706515 bekannt.

Das Neue ist darin zu sehen, daß in jeder der Hydraulikleitungen ein durch den Aufbau des Umsteuerdruckes in der anderen Hydraulikleitung entsperrbares Rückschlagventil angeordnet ist, welches jeweils über eine Steuerleitung direkt mit der anderen Hydraulikleitung verbunden ist.

Ein solcher Aufbau ist an sich aus US-A-2872903 bekannt, wo ein kompliziert gestaltetes, jedoch indirekt über eine Steuerleitung mit der anderen Hydraulikleitung verbundenes Druckhalteventil beschrieben wird.

Auf die neue, konstruktiv einfache Weise ist es möglich, die Umschaltzeiten zu minimieren. Derartige entsperrbare Rückschlagventile sind handelsüblich. Die erforderliche Steuerleitung ist in der Regel eine hydraulische Impulsleitung. Denkbar ist aber auch eine elektrische Steuerleitung mit einem zusätzlichen Drucksensor. Der konstruktive Mehraufwand gegenüber den herkömmlichen Vorrichtungen ist vergleichsweise gering und amortisiert sich durch die Vermeidung von Ausschuß in kurzer Zeit.

In der Zeichnung ist die neue Vorrichtung in drei Ausführungsbeispielen rein schematisch dargestellt und nachstehend näher erläutert. Es zeigen :

Fig. 1     ein Ausführungsbeispiel der Vorrichtung mit Steuerkolbenmischkopf im Schnitt,

Fig. 2     ein Ausführungsbeispiel der Vorrichtung mit Parallelstrommischkopf im Schnitt und

Fig. 3     ein Ausführungsbeispiel der Vorrichtung mit als Umschaltorgane dienenden Einspritzdüsen.

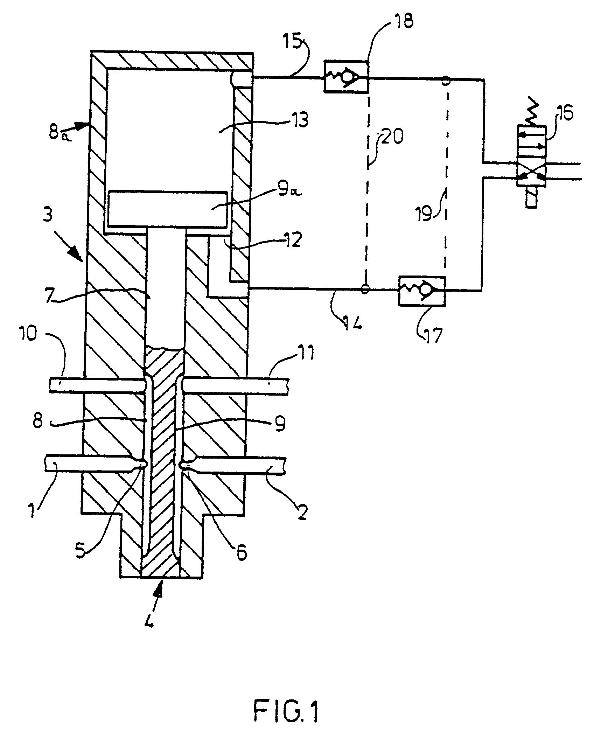

In Fig. 1 besteht die Vorrichtung aus nicht dargestellten Vorratsbehältern, von welchen Komponentenzuleitungen 1, 2 zu einem Mischkopf 3 führen, welcher eine Mischkammer 4 enthält. In diese münden die Zuleitungen 1, 2 über Düsenbohrungen 5, 6. In der Darstellung ist die Mischkammer 4 von einem Steuerkolben 7 als Umschaltorgan ausgefüllt, welcher Steuernuten 8, 9 aufweist. Diese verbinden in der dargestellten Position des Steuerkolbens 7 die Zuleitungen 1, 2 mit Rücklaufleitungen 10, 11, welche zu den Vorratsbehältern zurückführen. In der Mischstellung (nicht dargestellt) ist der Steuerkolben 7 so weit zurückgefahren, daß die Düsenbohrungen 5, 6 zur Mischkammer 4 hin freiliegen. Der Steuerkolben 7 ist mit einem in einem Hydraulikzylinder 8a geführten Hydraulikkolben 9a versehen, so daß beidseitig dieses Hydraulikkolbens 9a Hydraulikräume 12, 13 gebildet sind, welche über Hydraulikleitungen 14, 15 mit einem hydraulischen Umschaltventil 16 in Verbindung stehen. Dieses ist andererseits über eine nicht dargestellte Hydraulikpumpe mit einem Hydraulikreservoir (ebenfalls nicht dargestellt) verbunden. In den beiden Hydraulikleitungen 14, 15 ist jeweils ein entsperrbares Rückschlagventil 17, 18 angeordnet, welches über eine Steuerleitung 19, 20 auf den jeweils in der anderen Hydraulikleitung 15 bzw. 14 voll aufgebauten Umsteuerdruck anspricht. Dargestellt ist jene Position, in welcher das Umschaltventil 16 soeben auf den Mischvorgang umgeschaltet hat. Der Steuerkolben 7 als Umschaltorgan wird dank des noch anstehenden Haltedruckes so lange nicht bewegt, bis das Rückschlagventil 18 beim Erreichen des voll aufgebauten Umsteuerdruckes in der Hydraulikleitung 14 den Impuls zum Entsperren erhält. Das Umschalten erfolgt dabei unter Freigabe der Düsenbohrungen 5, 6 zur Mischkammer 4 schlagartig.

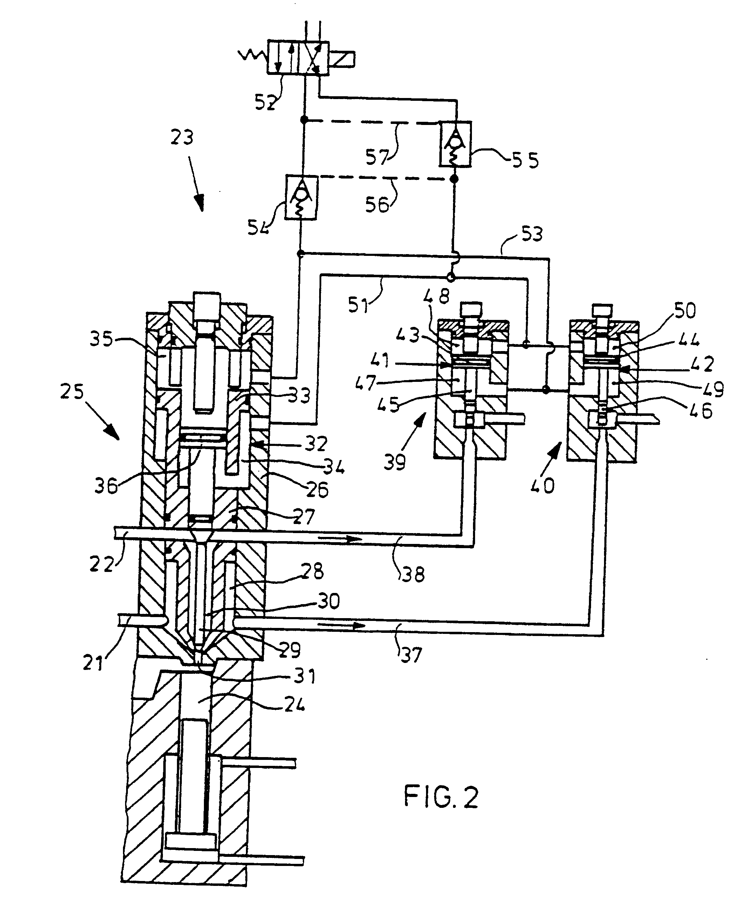

In Fig. 2 besteht die Vorrichtung aus nicht dargestellten Vorratsbehältern, von welchen Komponentenzuleitungen 21, 22 zu einem Mischkopf 23 führen, welchem eine Mischkammer 24 zugeordnet ist. Die Zuleitungen 21, 22 münden in eine Zweistoffdüse 25. Diese besteht aus einem Gehäuse 26 und einer Nadelhülse 27 sowie einer dazwischen angeordneten Kammer 28, in welche die Zuleitung 21 einmündet, und aus einer Düsennadel 29, welche zwischen sich und der Nadelhülse 27 eine Kammer 30 bildet, in welche die Zuleitung 22 mündet. Nadelhülse 27 und Düsennadel 29 verschließen in der Darstellung eine Düsenbohrung 31, welche in die Mischkammer 24 weist. Die Nadelhülse 27 ist in einem Hydraulikzylinder 32 mittels eines Hydraulikkolbens 33 geführt, wodurch zwei Hydraulikräume 34, 35 gebildet sind. Die Düsennadel 29 ist ebenfalls mit einem Hydraulikkolben 36 versehen, weicher in der Nadelhülse 27 geführt ist. Aus dem Gehäuse 26 münden Rücklaufleitungen 37, 38 aus, in welchen hydraulische Absperrventile 39, 40 angeordnet sind. Diese bestehen ebenfalls aus Hydraulikzylindern 41, 42 und Hydraulikkolben 43, 44 mit Absperrnadeln 45, 46, wobei die Hydraulikkolben 43, 44 die Hydraulikzylinder 41, 42 jeweils in zwei Hydraulikräume 47, 48 bzw. 49, 50 unterteilen. Von den Hydraulikräumen 34, 48 und 50 führt eine sich vereinigende Hydraulikleitung 51 zu einem hydraulischen Umschaltventil 52, welches über eine zweite Hydraulikleitung 53 mit den Hydraulikräumen 35, 47 und 49 verbunden ist. Das Umschaltventil 52 ist über eine Hydraulikpumpe mit einem Hydraulikreservoir (beide nicht dargestellt) verbunden. In den Hydraulikleitungen 51, 53 sind entsperrbare Rückschlagventile 54, 55 angeordnet, welche jeweils auf den sich in der anderen Hydraulikleitung 53 bzw. 51 aufbauenden Umsteuerdruck über Steuerleitungen 56, 57 ansprechen. Als Umschaltorgane dienen hier also die Zweistoffdüse 25 zusammen mit den Absperrventilen 39, 40. Dargestellt ist jene Position, in welcher das Umschaltventil 52 soeben zur Beaufschlagung der Hydraulikleitung 51 umgeschaltet hat, um einen Mischvorgang einzuleiten. Dabei wird das Rückschlagventil 54 vom Haltedruck erst entspannt, sobald sich in der Hydraulikleitung 51 der Umsteuerdruck voll aufgebaut hat. Durch das Umsteuern geben die Nadelhülse 27 und die Düsennadel 29 die Düsenbohrung 31 frei, während die Absperrnadeln 45, 46 gleichzeitig die Rücklaufleitungen 37, 38 absperren bzw. unterbrechen.

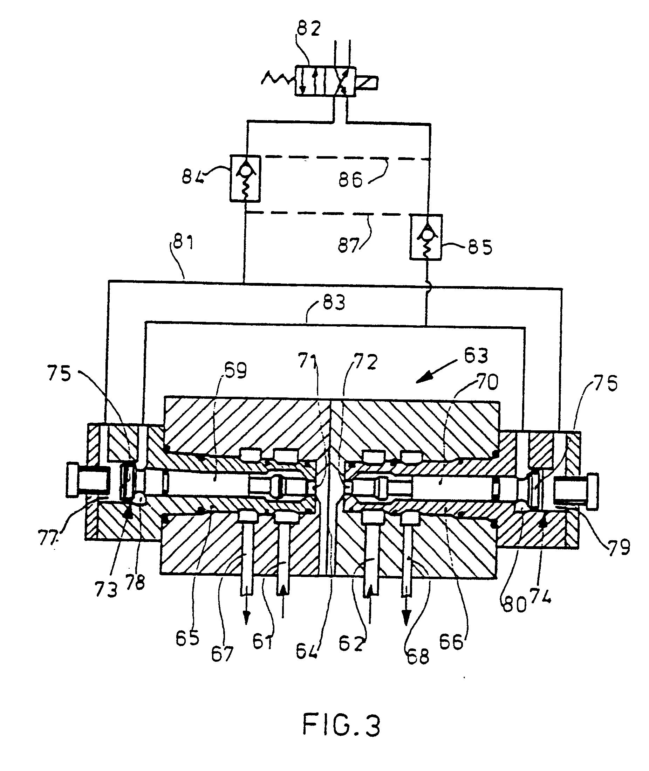

In Fig. 3 besteht die Vorrichtung aus nicht dargestellten Vorratsbehältern, von welchen Komponentenzuleitungen 61, 62 zu einem Mischkopf 63 führen, welcher eine Mischkammer 64 enthält. In diese münden die Zuleitungen 61, 62 über Einspritzdüsen 65, 66 ein. Diese Einspritzdüsen 65, 66 fungieren als Umschaltorgane, indem von ihnen Rücklaufleitungen 67, 68 zu den Behältern zurückführen. Die Düsennadeln 69, 70 sind so gestaltet, daß sie, wie dargestellt, die Zuleitungen 61, 62 mit den Rücklaufleitungen 67, 68 verbinden oder über Düsenbohrungen 71, 72 mit der Mischkammer 64 (nicht dargestellt). Den Düsennadeln 69, 70 sind Hydraulikzylinder 73, 74 zugeordnet, in denen Hydraulikkolben 75, 76 geführt sind, so daß jeweils zwei Hydraulikräume 77, 78 bzw. 79, 80 gebildet sind. Von den Hydraulikräumen 77, 79 führt eine sich vereinigende Hydraulikleitung 81 zu einem Umschaltventil 82 und von den Hydraulikräumen 78, 80 führt eine sich vereinigende Hydraulikleitung 83 ebenfalls zu dem Umschaltventil 82. Dieses ist über eine Hydraulikpumpe mit einem Hydraulikreservoir (beide nicht dargestellt) verbunden. In den Hydraulikleitungen 81, 83 sind entsperrbare Rückschlagventile 84, 85 angeordnet, welche über Steuerleitungen 86, 87 jeweils auf den sich in der anderen Hydraulikleitung 83 bzw. 81 aufbauenden Umsteuerdruck ansprechen. Dargestellt ist jene Position, in welcher das Umschaltventil 82 gerade zur Beaufschlagung der Hydraulikleitung 83 umgeschaltet hat. In der Hydraulikleitung 81 bleibt der anstehende Haltedruck so lange aufrechterhalten, bis sich der Umsteuerdruck in der Hydraulikleitung 83 voll aufgebaut hat. Sodann erhält das Rückschlagventil 84 über die Steuerleitung 86 den Befehl zum Entsperren und die Düsennadeln 69, 70 fahren schlagartig in Mischposition und geben dabei die Düsenbohrungen 71, 72 zur Mischkammer 64 hin frei.

Der Umschaltvorgang von Schuß auf Kreislauf verläuft in den drei beschriebenen Beispielen im umgekehrten Ablauf.

# EP 0 355 538 B1

## Patentansprüche

1. Verfahren zum Herstellen von Mehrkomponentenkunststoff bildenden, fließfähigen Reaktionsgemischen, wobei mindestens zwei fließfähige Reaktionskomponenten unter Hochdruck vermischt werden und die Vermischungszeiten mit Pausenzeiten, in denen die Reaktionskomponenten in der Regel im Kreislauf geführt werden, abwechseln und die Umsteuerung durch mindestens ein hydraulisch betätigbares Umschaltorgan (7; 25, 39, 40 ; 65, 66) erfolgt, dadurch gekennzeichnet, daß beim Umsteuern der am Umschaltorgan (7 ; 25, 39, 40 ; 65, 66) anliegende hydraulische Haltedruck so lange aufrechterhalten wird, bis sich auf der Gegenseite der hydraulische Umsteuerdruck voll aufgebaut hat, und erst dann der hydraulische Haltedruck schlagartig entspannt wird.

2. Vorrichtung zum Herstellen von Mehrkomponentenkunststoff bildenden, fließfähigen Reaktionsgemischen, bestehend aus einem Mischkopf (3 ; 23 ; 63), welcher eine Mischkammer (4 ; 24 ; 64) enthält, in welche Zuleitungen (1, 2 ; 21, 22 ; 61, 62) über Düsenbohrungen (5, 6 ; 31 ; 71, 72) einmünden, und die Zuleitungen (1, 2 ; 21, 22 ; 61, 62) über mindestens ein Umschaltorgan (7 ; 25, 39, 40 ; 65, 66) mit Rücklaufleitungen (10, 11 ; 37, 38 ; 67, 68) verbindbar sind, wobei das Umschaltorgan (7 ; 25, 39, 40 ; 65, 66) einen Hydraulikzylinder (8a ; 32, 41, 42 ; 73, 74) mit einem beidseitig wechselweise beaufschlagbaren Hydraulikkolben (9a ; 33, 36, 43, 44 ; 75, 76) aufweist und von den so gebildeten Hydraulikräumen (12, 13 ; 34, 35, 47, 48, 49, 50 ; 77, 78, 79, 80) Hydraulikleitungen (14, 15 ; 51, 53 ; 81, 83) zu einem hydraulischen Schaltventil (16 ; 52 ; 87) führen, dadurch gekennzeichnet, daß in jeder der Hydraulikleitungen (14, 15 ; 51, 53 ; 81, 83) ein durch den Aufbau des Umsteuerdruckes in der andere Hydraulikleitung (15 bzw. 14 ; 53 bzw. 51 ; 83 bzw. 81) entsperrbares Rückschlagventil (17, 18 ; 54, 55 ; 84, 85) angeordnet ist, welches jeweils über eine Steuerleitung (19, 20 ; 56, 57 ; 86, 87) direkt mit der anderen Hydraulikleitung (15, 14 ; 53, 51 ; 83, 81) verbunden ist.

## Claims

1. Method for producing flowable reaction mixtures forming multicomponent plastic material, in which at least two flowable reaction components are mixed at high pressure and the mixing periods alternate with intervals in which the reaction components are as a rule circulated and the reversal is carried out by at least one hydraulically operable reversing component (7 ; 25, 39, 40 ; 65, 66), characterized in that, when reversing, the hydraulic locking pressure on the reversing component (7 ; 25, 39, 40 ; 65, 66) is maintained until the hydraulic reversing pressure has built up fully on the opposite side, and only then is the hydraulic locking pressure abruptly released.

2. Device for producing flowable reaction mixtures forming multicomponent plastic material, consisting of a mixing head (3 ; 23 ; 63) which contains a mixing chamber (4 ; 24 ; 64) into which feed lines (1, 2 ; 21, 22 ; 61, 62) discharge via nozzle bores (5, 6 ; 31 ; 71, 72), and the feed lines (1, 2 ; 21, 22 ; 61, 62) can be connected via at least one reversing component (7 ; 25, 39, 40 ; 65, 66) with return lines (10, 11 ; 37, 38 ; 67, 68), in which the reversing component (7 ; 25, 39, 40 ; 65, 66) has a hydraulic cylinder (8 ; 32, 41, 42 ; 73, 74) with a hydraulic piston (9 ; 33, 36, 43, 44 ; 75, 76) which can be acted upon from both sides alternately and from the hydraulic chambers so formed (12, 13 ; 34, 35, 47, 48, 49, 50 ; 77, 78, 79, 80) hydraulic lines (14, 15 ; 51, 53 ; 81, 83) lead to a hydraulic control valve (16 ; 52 ; 82), characterized in that in each of the hydraulic lines (14, 15 ; 51, 53 ; 81, 83) there is disposed a nonreturn valve (17, 18 ; 54, 55 ; 84, 85), which can be unsealed by the buildup of the reversing pressure in the other hydraulic line (15 or 14 respectively ; 53 or 51 respectively ; 83 or 81 respectively), each nonreturn valve (17, 18 ; 54, 55 ; 84, 85) being connected directly with the other hydraulic line (15, 14 ; 53, 51 ; 83, 81) by a control line (19, 20 ; 56, 57 ; 86, 87).

## Revendications

1. Procédé de production de mélanges réactionnels fluides formant une matière synthétique à plusieurs constituants, suivant lequel au moins deux constituants réactionnels fluides sont mélangés sous haute pression et les temps de mélange alternent avec des temps de repos pendant lesquels les constituants réactionnels sont dirigés en général dans le circuit et le changement de régime est produit par au moins un organe d'inversion (7 ; 25, 39, 40 ; 65, 66) actionné hydrauliquement, caractérisé en ce que, au cours du changement de régime, la pression hydraulique de maintien appliquée à l'organe d'inversion (7 ; 25, 39, 40 ; 65, 66) est conservée jusqu'à ce que la pression hydraulique se soit élevée sur le côté opposé jusqu'à la totalité de celle de changement de régime et ensuite seulement la pression hydraulique de maintien subit un abaissement brusque.

2. Dispositif de production de mélanges réactionnels fluides formant une matière synthétique à plusieurs

4

constituants, dispositif se composant d'une tête mélangeuse (3 ; 23 ; 63) comprenant une chambre de mélange (4 ; 24 ; 64) dans laquelle des canalisations d'arrivée (1, 2 ; 21, 22 ; 61, 62) débouchent par des ajutages (5, 6 ; 31 ; 71, 72) et au moins un organe d'inversion (7 ; 25, 39, 40 ; 65, 66) peut relier les canalisations d'arrivée (1, 2 ; 21, 22 ; 61, 62) à des canalisations de reflux (10, 11 ; 37, 38 ; 67, 68), l'organe d'inversion (7 ; 25, 39, 40 ; 65, 66) comprenant un cylindre hydraulique (8a ; 32, 41, 42 ; 73, 74) ainsi qu'un piston hydraulique (9a ; 33, 36, 43, 44 ; 75, 76) pouvant être exposé à la pression en alternance des deux côtés et des canalisations hydrauliques (14, 15 ; 51, 53 ; 81, 83), qui partent des chambres hydrauliques ainsi formées (12, 13 ; 34, 35, 47, 48, 49, 50 ; 77, 78, 79, 80), menant à un distributeur hydraulique de commande (16 ; 52 ; 87), caractérisé en ce qu'un clapet anti-retour (17, 18 ; 54, 55 ; 84, 85) disposé dans chacune des canalisations hydrauliques (14, 15 ; 51, 53 ; 81, 83) est déblocable par l'apparition de la pression de changement de régime dans l'autre canalisation hydraulique (15 ou 14 ; 53 ou 51 ; 83 ou 81), chacun de ces clapets anti-retour étant relié directement à l'autre canalisation hydraulique (15, 14 ; 53, 51 ; 83, 81) par un conduit de commande (19, 20 ; 56, 57 ; 86, 87).

FIG.1

FIG. 2

FIG.3